# EUROPÄISCHE PATENTANMELDUNG

(11) **EP 1 177 824 A1**
(43) Veröffentlichungstag der Anmeldung: **06.02.2002**
(21) Anmeldenummer: 00116215.5
(22) Anmeldetag: 03.08.2000
(51) Int. Cl.: B01D 17/02, B01D 21/00, E03F 5/16, C02F 1/40

(54) **Fettabscheider**

(71) Anmelder: Hopfgartner, Robert, 85053 Ingolstadt (DE)
(72) Erfinder: Hopfgartner, Robert, 85053 Ingolstadt (DE)
(74) Vertreter: VOSSIUS & PARTNER

(57) **Zusammenfassung**

Fettabscheider vorzugsweise aus PE-HD (Polyethylen-High Density) besteht aus einem mindestens zweigeteilten Behälter (10), mit einer horizontal geteilten Behälterwand (12) und Behälterwandteilen (14, 16) die über eine Steckverbindung (22) miteinander verbunden werden können. Ein Ende eines Behälterwandteils (14) ist dabei in Form einer Ausnehmung (24) oder Auskragung (20) so ausgebildet, daß es auf das Ende eines anderen Behälterwandteils (16) aufgesteckt werden kann und dieses dabei überlappt. In einem Behälterwandteil (16) ist im Überlappungsbereich (32) der beiden Behälterwandteile (14, 16) eine Vertiefung (26, 28) angebracht zum Vorsehen einer Dichtung wie einer Lippendichtung (34). Dadurch wird beim Aufstecken deines Behälterwandteils (14) mit einer Ausnehmung (24) oder Auskragung (20) auf ein anderes Behältertwandteil (16), die Dichtung (34) auf die gegenüberliegende Wand angedrückt, so daß eine Abdichtung gegen das Austreten von Flüssigkeit oder Dampf aus dem Behälter (10) erzeugt wird.

## Beschreibung

Die Erfindung betrifft einen Fettabscheider, der im Oberbegriff des Patentanspruchs 1 angegebenen Art. Auf einen solchen bekannten Fettabscheider wird weiter unten näher eingegangen.

Als Fettabscheider werden Abscheideranlagen für Fette bezeichnet, die der deutschen Norm DIN EN 1825-1 entsprechen. Ihr Einsatz ist insbesondere vorgeschrieben, wo Essen gewerblich zubereitet wird. Dies umfaßt beispielsweise Großküchen von Kantinen ebenso wie kleine Eß- oder Imbißstände.

Allgemein besteht ein solcher Fettabscheider aus einem durchgehenden Behälter, der aus Beton, metallischen Werkstoffen, oder glasfaserverstärktem Kunststoff etc. bestehen kann. Der Behälter verfügt über einen Zu- und Ablauf. Über den Zulauf wird ein zumeist heißes Wasserfettgemisch in den Behälter geleitet, das beispielsweise beim Zubereiten von Speisen oder beim Geschirrspülen entsteht. In einem Schlammfang im Inneren des Behälters werden zunächst grobe Partikel des Gemisches herausgefiltert. Das gefilterte Gemisch tritt dann in einem von dem Schlammfang und dessen Zuleitung gegebenenfalls abgetrennten Raum des Behälters. Dort wird das Wasserfettgemisch getrennt indem sich die Fettbestandteile durch langsames Abkühlen an der Oberfläche des Gemisches absetzten während sich darunter fettfreies Wasser bildet. Der Ablauf liegt dabei unterhalb der Höhe des Zulaufs, so daß er mit diesem ein Überlaufsystem bildet. Wird erneut weiteres Wasserfettgemisch über den Zulauf in den Behälter geleitet, so fließt gleichzeitig ein Teil des sich gebildeten fettfreien Wassers über den Ablauf ab. Der Ablauf ist hierfür im Innern des Behälters über ein parallel zur Behälterwand verlaufendes Rohr verbunden, welches in den Bereich hineinragt wo sich fettfreies Wasser gebildet hat. Auf diese Weise kann immer wieder Wasserfettgemisch nachfließen, bis die Fettschicht eine maximale Dicke erreicht hat. Hierzu ist an dem Fettabscheider beispielsweise ein Schauglas vorgesehen zur Kontrolle der Fettschichtdicke. Erreicht diese einen vorgegebenen maximalen Wert, so wird der Behälter vollständig abgesaugt und der Inhalt speziell entsorgt.

Ein solcher Fettabscheider wie zuvor beschrieben hat in einer runden Ausführung im allgemeinen einen Durchmesser von 1m bis 2,60m und eine Höhe von bis zu 3m. Aufgrund der verhältnismäßig großen Abmessungen und einem entsprechenden Gewicht, auch bei einem Kunststoffbehälter, läßt sich ein solcher Fettabscheider nur schlecht transportieren, da sich nicht jedes Fahrzeug hierfür eignet. Zudem ist das Be- und Entladen sowie das Aufstellen eines solchen Behälters in einem Raum aufwendig, da Türen für den Behälter häufig zu schmal sind, so daß dieser vor Ort einzeln zusammengesetzt werden muß.

Allgemein sind Fettabscheider aus Edelstahl bekannt mit einer horizontal geteilten Behälterwand, wobei die geteilten Behälterwände über eine Schraubverbindung miteinander verbunden werden. Hierbei sind die entsprechenden Enden der Behälterwände als Flansch ausgebildet. An mindestens einem Flansch sind dabei durchgehende Gewinde vorgesehen. Der andere Flansch kann dagegen entweder mit Durchgangsbohrungen zum Hindurchführen von Schrauben oder ebenfalls mit durchgehenden Gewinden versehen sein. Eine Abdichtung der Schraubenverbindung kann durch Einlegen einer Gummidichtung zwischen die beiden Flansche erfolgen. Hierbei kann an einem der Flansche eine Positionierung für die Dichtung vorgesehen sein, was mit Kosten verbunden ist. Der Nachteil einer solchen Verbindung besteht darin, daß in der Herstellung die Ausbildung von Flanschen an den Behälterwänden sowie das Vorsehen dazugehörender Gewinde und/oder Durchgangsbohrungen sehr aufwendig und teuer ist. Zudem erhöht sich die Anzahl der Bohrungen mit zunehmendem Durchmesser des Behälters. Darüber hinaus ist die Montage aufwendig, da die Bohrungen und gegebenenfalls der eingelegte Dichtungsring zentriert werden müssen, was bei einer entsprechend großen und schweren Behälterwand mit erheblichem Aufwand verbunden ist. Außerdem benötigt das Verschrauben zusätzliche Zeit bei der Montage des Behälters.

Weiter sind Fettabscheider aus Edelstahl mit einer geteilten Behälterwand bekannt, bei denen die Behälterwände über einen Spannring miteinander verbunden werden. Hierbei sind die Enden der Behälterwandteile ebenfalls als Flansch ausgebildet. Zwischen die Flansche wird ein Dichtungsring eingelegt, gegebenenfalls in eine dafür vorgegebene Positionierung. Die Behälterwandteile und der Dichtungsring werden dann über einen Spannring miteinander verspannt. Nachteilig ist hierbei, daß die Behälterwände als Flansch ausgebildet und mit der dazwischen liegenden Dichtung zueinander zentriert werden müssen. Der Spannring muß darüber hinaus exakt mit den beiden Flanschen verbunden werden, um ein gleichmäßiges Abdichten zu gewährleisten. Darüber hinaus ist eine solche Lösung bisher nur für Edelstahlbehälter geeignet und im Gebrauch.

Aufgabe der Erfindung ist es, einen Fettabscheider, insbesondere aus HDPE/PE-HD bereitzustellen, der leicht vor Ort aufgestellt werden kann.

Diese Aufgabe ist erfindungsgemäß durch einen Fettabscheider mit den Merkmalen des Anspruchs 1 und des Verfahrensanspruchs 12 gelöst.

Erfindungsgemäß besteht der Fettabscheider aus einem wenigstens zweiteiligen Behälter, mit einer horizontal geteilten Behälterwand und Behälterwandteilen die über eine Steckverbindung miteinander verbindbar sind.

Eine solche Steckverbindung stellt eine besonders einfache Art der Verbindung dar, da ein an einem Ende mit einer Auskragung oder Ausnehmung versehenes Behälterwandteil auf ein anderes daran angepaßtes Behälterwandteil aufgesteckt und zugleich zentriert werden kann. Hierbei entfällt ein aufwendiges Zentrieren, wie es beispielsweise bei der zuvor beschriebenen Schraub- oder Spannringverbindung notwendig ist. Außerdem ist die Montage erheblich einfacher, da die Behälterwandteile lediglich zusammengesteckt werden müssen ohne dabei aufwendig miteinander verschraubt oder verspannt zu werden.

Insbesondere bei Behältern, deren Behälterwand aus einem Flachmaterial hergestellt wird, das beispielsweise aus Kunststoff, besonders bevorzugt aus PE-HD (Polyethylen-High Densitiy) besteht, kann eine Auskragung auf besonders einfache und preisgünstige Weise hergestellt werden. Dabei wird ein durchgehender Abschnitt beispielsweise aus demselben Material auf das Flachband aufgebracht. Dies kann durch Aufschweißen erfolgen. Hierbei ist es zu bevorzugen, daß der Abschnitt zur Bildung einer Auskragung nicht vollständig über die Behälterwand steht, sondern teilweise mit ihr überlappt, um so eine zusätzliche Stabilisierung der Auskragung zu erzielen. Ein besonderer Vorteil ist hierbei, daß das korrespondierende Behälterwandteil nicht gesondert an die Auskragung angepaßt werden muß, sondern ein identisches Behälterwandteil ohne zusätzliche Auskragung verwendet werden kann.

Ebenso kann eine Ausnehmung an einem Behälterwandteil vorgesehen sein, wobei die Ausnehmung in das Ende des Behälterwandteils eingeformt werden muß.

Weiter bildet die Steckverbindung durch ein ausreichendes und formschlüssiges Überlappen der zusammengesteckten Behälterwandteile eine stabile Verbindung beispielsweise gegen ein Kippen einzelner Behälterwandteile bei seitlicher Belastung. Zudem ist zwischen den Behälterwandteilen im Überlappungsbereich kein oder nahezu kein Spalt vorgesehen.

Bei der bereits erwähnten Schraubenverbindung ist es dagegen notwendig, daß beide Behälterwandteile mit einem Flansch versehen werden. Außerdem muß an jedem Flansch eine ausreichende Anzahl an Bohrungen mit Gewinde und/oder Durchgangsbohrungen angebracht sein, gemäß der Größe des Behälterdurchmessers. Dies ist mit einem erheblichen Herstellungs- und Kostenaufwand verbunden. Darüber hinaus müssen die Bohrungen bei der Montage sowie ein zwischen die Flansche eingelegter Dichtungsring exakt zentriert werden, um die gewünschte Dichtigkeit des Behälters zu gewährleisten. Ebenfalls aufwendig und teuer ist wie bereits beschrieben das Verbinden von Behälterwandteilen über einen Spannring. Auch hier müssen beide Behälterwandteile mit einem Flansch versehen werden. Zur Abdichtung wird ein Dichtungsring zwischen die beiden Flansche eingebracht, wobei entweder an einem Flansch eine Möglichkeit zum genauen Positionieren der Dichtung vorgesehen sein muß oder die Flansche und der Dichtungsring selbständig zueinander positioniert werden müssen.

Die Abdichtung der Steckverbindung gegen den Austritt von Flüssigkeit oder Dampf aus dem Behälter erfolgt vorzugsweise durch das Vorsehen mindestens einer Vertiefung in einem Behälterwandteil im Überlappungsbereich der beiden Behälterwandteile. Wie oben bei einem Behälter aus Kunststoff bereits beschrieben, ist es zu bevorzugen, dessen Behälterwandteile aus Flachmaterial herzustellen. Hierbei ist es besonders vorteilhaft, wenn eine Vertiefung in Form einer Nut bereits in das Flachmaterial gefräst wird, bevor dieses zu einem umflaufenden Zylinder gefügt wird. Auf diese Weise kann sehr einfach und kostengünstig eine Vertiefung in dem Behälterwandteil hergestellt werden, da keine Nut in ein umlaufendes Behälterwandteil eingeformt werden muß.

In eine solche Vertiefung wird eine Dichtung, bevorzugt eine Lippendichtung eingesetzt. Hierbei ist es bei den bereits beschriebenen Kunststoffbehältern aus Flachmaterial von besonderem Vorteil, wenn eine Dichtung bereits in dem Flachmaterial kalt verklebt und gefettet wird. Hierbei wird vermieden, daß durch Erwärmung des Flachmaterials beim Fügen zu einem umlaufenden Zylinder die Dichtung verrutschen kann.

Der besondere Vorteil einer Lippendichtung liegt unter anderem in ihrer Form. Hierbei ist es zu bevorzugen, daß die Lippe der Lippendichtung leicht aus der Behälterwand heraussteht. Wird nun ein Behälterwandteil mit einer Ausnehmung oder Auskragung über das Behälterwandteil mit der Dichtung gesteckt, so wird die Lippendichtung zum einen zusammengedrückt und zum anderen die Lippe gemäß der Bewegung der Ausnehmung oder Auskragung zusätzlich leicht nach unten geschoben. Ein besonderer Vorteil ist hierbei, daß die Lippe der Lippendichtung durch eine leichte Neigung die Bewegung der Auskragung oder Ausnehmung beim Aufstecken des Behälterwandteils gut aufnehmen kann, ohne daß die Gefahr besteht, daß sie beschädigt wird. Ein besonderer Vorteil ist weiter, daß die Lippe der Lippendichtung die Vertiefung bzw. Nut nicht vollständig ausfüllt, so daß genügend Platz vorhanden ist, daß wenn die Lippe ein Stück mit der Bewegung der Ausnehmung oder Auskragung nach unten geschoben wird, die Dichtung nicht zwischen die beiden Behälterwandteile eingeklemmt und beschädigt werden kann. Dies gilt auch für den Fall, wenn das Behälterwandteil mit der Ausnehmung oder Auskragung wieder entfernt wird. Auch hier ist genug Spielraum vorhanden, so daß die Lippendichtung nicht zwischen die Ausnehmung oder Auskragung und das Behälterwandteil geklemmt werden kann. Auf diese Weise ist gewährleistet, daß die Lippendichtung auch bei mehrmaligem Benutzen nicht beschädigt und eine abdichtende Wirkung durch das Anpressen der Lippendichtung auf die Innenwandung der Ausnehmung oder Auskragung erzielt wird.

Es konnte überraschenderweise von dem Erfinder festgestellt werden, daß bei Befüllen des Behälters eine solche Abdichtung die Dichtigkeit der Verbindung der Behälterwandteile noch zusätzlich verbessert. Dies geschieht indem besonders bei einem Behälter aus Kunststoff der Wasserdruck insbesondere auf das untere Behälterwandteil drückt. Der elastische Kunststoff gibt hierbei dem Druck nach, so daß das untere Behälterwandteil mit seiner Dichtung zusätzlich gegen die Innenwand der Ausnehmung oder Auskragung gedrückt wird. Die Dichtung erfährt also nochmals einen zusätzlichen Druck der sie gegen die Innenseite der Ausnehmung oder Auskragung drückt, so daß die Abdichtwirkung weiter verbessert wird. Bei den zuvor beschriebenen Abdichtungsformen der Schraub- oder Spannringverbindungen ist dies nicht möglich. Hier hängt die Dichtigkeit der Verbindung davon ab, wie exakt und fest die Flansche und die dazugehörende Dichtung miteinander verbunden sind.

Das sehr gute Dichtigkeitsverhalten eines so gestalteten Behälters zeigen folgende Dichtigkeitsversuche.

In einem Kurzzeitversuch wurde ein Fettabscheider mit einem Behälter aus Kunststoff wie oben beschrieben bis zur Unterkante seines Auslaufs mit Wasser gefüllt, wobei das Wasser auf 70° C erwärmt gehalten wurde. Bei einer Prüf- bzw. Standzeit von 10 Stunden und bei einer gleichbleibenden Temperatur von 70° C konnte keine Undichtigkeit festgestellt werden.

In einem Langzeitversuch, bei dem derselbe Fettabscheider wie aus dem Kurzzeitversuch verwendet wurde, wurde Wasser ebenfalls bis zur Unterkante des Auslaufs gefüllt, wobei das Wasser auf 50° C erwärmt gehalten wurde. Bei einer Prüf- bzw. Standzeit von 720 Stunden und bei einer gleichbleibenden Temperatur von 50° C konnten ebenfalls keinerlei Undichtigkeiten festgestellt werden.

Ausführungsbeispiele der Erfindung werden im folgenden unter Bezugnahme auf die Zeichnungen näher beschrieben. Es zeigt:
- Figur 1: eine Querschnittansicht einer bevorzugten Ausführungsform des Fettabscheiders gemäß der Erfindung;
- Figur 2: eine Querschnittansicht einer Steckverbindung zwischen einem oberen Behälterwandteil, das mit einer Auskragung versehen ist und einem unteren Behälterwandteil;
- Figur 3: eine Querschnittansicht einer Steckverbindung zwischen einem oberen Behälterwandteil welches mit einer Ausnehmung versehen ist und einem unteren Behälterwandteil.

### Beschreibung der Zeichnungen

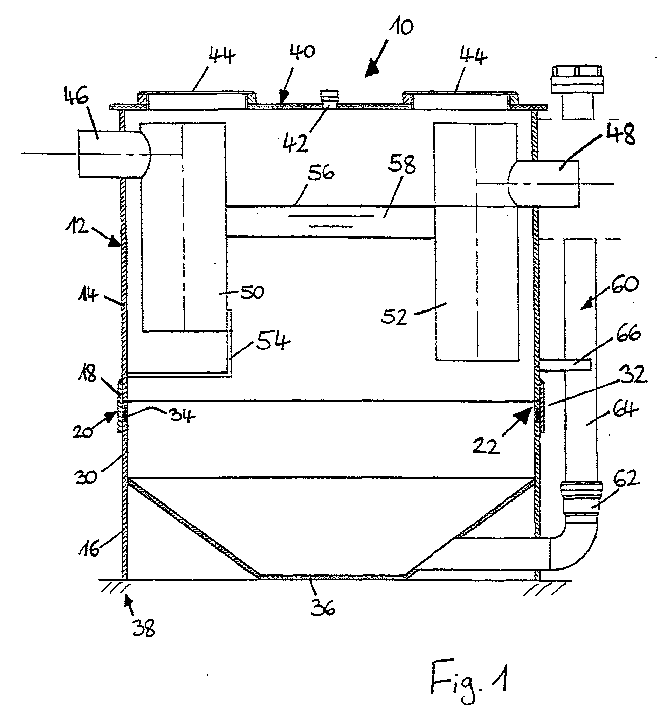

In Figur 1 ist ein Fettabscheider in Form eines im wesentlichen zylinderförmigen, zweigeteilten Behälters 10 dargestellt. Die Behälterwand 12 ist dabei horizontal in ein oberes und unteres Behälterwandteil 14, 16 geteilt.

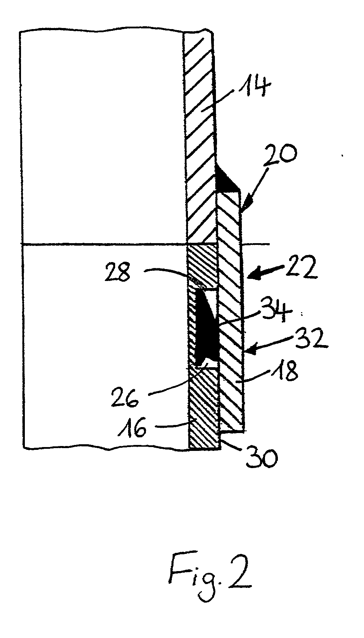

An dem oberen Behälterwandteil 14 ist ein umlaufender Abschnitt 18 angeschweißt, der mit dem unteren Ende des Behälterwandteils eine Auskragung 20 bildet, wie in Fig. 2 dargestellt. Der Abschnitt 18 überlappt dabei teilweise das obere Behälterwandteil 14 und bildet so eine stabile Verbindung mit demselben.

Das untere Behälterwandteil 16 entspricht dem oberen Behälterwandteil 14 ausgenommen dem zusätzlich angeschweißten Abschnitt 18. Eine gesonderte Anpassung des unteren Behälterwandteils 16 an die Auskragung 20 ist nicht notwendig, da das obere Behälterwandteil 14 direkt auf das untere Behälterwandteil 16 aufgesteckt werden kann und so eine bevorzugte Ausführungsform der Steckverbindung 22 gemäß der Erfindung gebildet wird.

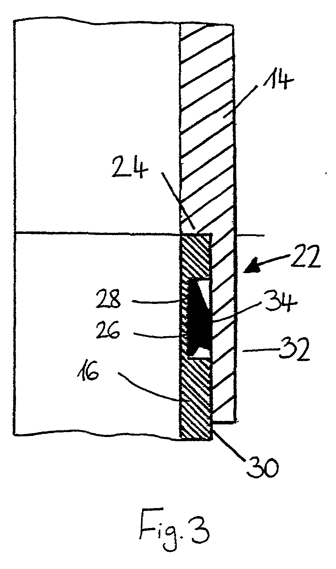

Statt einer Auskragung 20 wie oben beschrieben, kann beispielsweise auch eine Ausnehmung 24 wie in Fig. 3 dargestellt an dem oberen Behälterwandteil 14 vorgesehen werden.

In beiden Fällen überlappen die Auskragung 20 oder Ausnehmung 24 das untere Behälterwandteil 16.

Zur Abdichtung der so über eine Steckverbindung 22 verbundenen Behälterwandteile 14, 16 ist gemäß der Fig. 1, 2 und 3 eine Vertiefung 26 in Form einer Nut 28 an der Außenseite 30 des unteren Behälterwandteils 14 vorgesehen. Die Nut ist dabei in einem Überlappungsbereich 32 zwischen der Auskragung 20 oder Ausnehmung 24 und dem unteren Behälterwandteil 16 gefräst.

Zur Abdichtung der Steckverbindung 22 gegen den Austritt von Flüssigkeit oder Dampf aus dem Behälter 10 wird eine sogenannte Lippendichtung 34 in der Nut 28 angebracht.

Wie in Figur 2 und 3 dargestellt wird die Lippendichtung 34 beim Aufstecken des oberen Behälterwandteils 14 auf das untere Behälterwandteil 16 leicht zusammengedrückt und etwas nach unten geschoben. In der Nut 28 ist nach unten hin genügend Platz, so daß die Dichtung 34 nicht zwischen die Auskragung 20 oder Ausnehmung 24 und das untere Behälterwandteil 16 eingeklemmt und beschädigt werden kann.

An das untere Behälterwandteil ist ein tellerförmiger Boden 36 angeschweißt, der mit dem unteren Behälterwandteil 16 auf einem Boden 38 aufliegt. Das obere Behälterwandteil 14 ist mit einem Deckel 40 versehen, der eine Einschweißmuffe 42 und zwei Schraubdeckel 44 aufweist. In dem oberen Behälterwandteil 14 ist zudem ein Schauglas (nicht dargestellt) sowie ein Zu- und Ablauf 46, 48 vorgesehen, der jeweils mit einem senkrechten Rohr 50, 52 im Innern des Behälters verbunden ist. An das senkrechte Rohr 50 des Zulaufs 46 schließt sich hierbei im Innern des Behälters ein sogenannter Schlammfang 54 an.

Über den Zulauf 46 wird heißes Wasserfettgemisch in den Behälter 10 und über das senkrechte Rohr 50 des Zulaufs 46 durch den Schlammfang 54 geleitet. In dem Schlammfang 54 werden feste Partikel des Wasserfettgemisches herausgefiltert. Der Schlammfang 54 und das senkrechte Rohr 50 des Zulaufs 46 sind dabei von dem übrigen Behälterinneren abgetrennt angebracht.

Während des Abkühlens des Wasserfettgemisches setzt sich das Fett an der Oberfläche 56 des Gemisches ab und bildet eine Fettschicht 58 während sich darunter fettfreies Wasser bildet. Der Ablauf 48 ist unterhalb der Höhe des Zulaufs 46 an dem oberen Behälterwandteil 14 angebracht, so daß er mit dem Zulauf 46 ein Überlaufsystem bildet. Auf diese Weise kann ständig Wasserfettgemisch in den Behälter 10 eingeleitet werden, während über den Ablauf 48 gleichzeitig fettfreies Wasser abgeleitet werden kann. Hierfür ist der Ablauf 48 ebenfalls mit einem senkrechten Rohr 52 im Innern des Behälters verbunden, das mit seinem Ende in den unteren Bereich des Behälters 10 hineinragt wo sich fettfreies Wasser bildet, so daß, abgesehen von einer kleinen Fettschicht die sich im Innern des Rohrs 52 bilden kann, keine Gefahr besteht, daß ein Teil der an der Oberfläche 56 abgelagerten Fettschicht 58 in das Rohr 52 und somit in den Ablauf 48 gelangen kann. Über das in dem oberen Behälterwandteil 14 angebrachte Sichtglas (nicht dargestellt) wird kontrolliert ob die Fettschicht 58 eine vorgegebene maximale Dicke erreicht hat, oder ob weiteres Wasserfettgemsich zugeführt werden kann. Bei Erreichen einer maximalen Dicke der Fettschicht 58 wird der Behälter 10 über einen am Behälterboden 36 angebrachten Entsorgungsanschluß 60 vollständig abgesaugt. Der Inhalt muß danach gesondert entsorgt werden. Der Entsorgungsanschluß 60 führt von dem Behälterboden 36 nach außen und wird dabei über eine Steckmuffe 62 mit einem Rohr 64 an der Außenseite des Behälters 10 verbunden. Diese Rohr 64 führt bis zur Behälteroberseite und wird dabei abnehmbar von einer Halterung 66 an dem oberen Behälterwandteil 14 gehalten. Auf diese Weise wird ein einfaches Entleeren des Behälters 10 ermöglicht, da der Entsorgungsanschluß 60 gut erreichbar bis an die Höhe der Behälteroberfläche reicht. Außerdem werden die geteilten Behälterwände 14, 16 zusätzlich miteinander verbunden durch den an der Außenwand des Behälters 10 geführten Entsorgungsanschluß 60. Darüber hinaus müssen zum Entleeren die vorgenannten Schraubdeckel 44 nicht geöffnet werden, so daß sich die Geruchsbelästigung in Grenzen hält. Die Schraubdeckel 44 auf dem Behälter dienen unter anderem als Wartungsöffnungen um gegebenenfalls die senkrechten Rohre 50, 52 des Zu- und Ablaufs 46, 48 zu kontrollieren. Statt der Einschweißmuffe 42 kann auch ein zusätzlicher Schraubdeckel (nicht dargestellt) vorgesehen sein.

## Patentansprüche

1. Fettabscheider der einen Behälter (10) aufweist, ausgebildet mit mindestens einem im wesentlichen runden Umfangsabschnitt, mit einer mindestens zweigeteilten Behälterwand (12) im Bereich des Umfangsabschnitts, wobei die Verbindung von Behälterwandteilen (14, 16) abdichtend ausgeführt ist und wobei die Behälterwandteile (14, 16) über eine Steckverbindung (22) verbunden werden können.

2. Fettabscheider nach Anspruch 1, **dadurch gekennzeichnet, daß** der Behälter (10) aus Kunststoff besteht, vorzugsweise aus Polyethylen, besonders bevorzugt aus PE-HD (Polyethylen-High Density).

3. Fettabscheider nach Anspruch 1 oder 2, **dadurch gekennzeichnet,**
**daß** die Steckverbindung (22) so ausgeführt ist, daß mindestens ein Behälterwandteil (14) das andere Behälterwandteil (16) überlappt.

4. Fettabscheider nach Anspruch 3, **dadurch gekennzeichnet,**
**daß** mindestens ein Behälterwandteil (14) an seinem dem anderen Behälterwandteil (16) zugewandten Ende eine Ausnehmung (24) aufweist.

5. Fettabscheider nach Anspruch 4, **dadurch gekennzeichnet,**
**daß** die Ausnehmung (24) in Form einer Auskragung (20) ausgebildet ist.

6. Fettabscheider nach Anspruch 5, **dadurch gekennzeichnet,**
**daß** die Auskragung (20) in Form eines umlaufenden Abschnitts (18) gebildet ist, wobei der Abschnitt (18) mit dem Behälterwandteil (14) fest verbunden ist.

7. Fettabscheider nach Anspruch 6, **dadurch gekennzeichnet,**
**daß** der an dem Behälterwandteil (14) befestigte Abschnitt (18) dieses Behälterwandteil (14) teilweise überlappt.

8. Fettabscheider nach einem der Ansprüche 6, 7, **dadurch gekennzeichnet,**
**daß** der Abschnitt (18) an der Außenseite des Behälterwandteils (14) angeschweißt ist.

9. Fettabscheider nach einem der Ansprüche 1 bis 8 **dadurch gekennzeichnet, daß** in dem Überlappungsbereich (32) der beiden Behälterwandteile (14, 16) mindestens eine umlaufende Vertiefung (26) in mindestens einer der Behälterwandteile (14, 16) vorgesehen ist, wobei die Vertiefung (26) vorzugsweise in Form einer Nut (28) ausgebildet ist.

10. Fettabscheider nach Anspruch 9, **dadurch gekennzeichnet, daß** die Nut (28) in das Flachmaterial gefräst ist.

11. Fettabscheider nach einem der Ansprüche 9, 10, **dadurch gekennzeichnet,**
**daß** in die Vertiefung (26) eine Dichtung (34) eingebracht wird, wobei die Dichtung (34) vorzugsweise kalt in die Nut des Flachmaterials geklebt und gefettet ist und besonders bevorzugt eine Lippenprofildichtung ist.

12. Verfahren zum Ausbilden eines Fettabscheiders, insbesondere nach einem der vorstehenden Ansprüche, mit den folgenden Schritten :
a) Bereitstellen eines Behälters (10) mit mindestens einem im wesentlichen runden Umfangsabschnitt und mit einer mindestens zweigeteilten Behälterwand (12) im Bereich des Umfangsabschnitts
b) Vorsehen einer Abdichtung der Verbindung der Behälterwandteile (14, 16)
c) Verbinden der Behälterwandteile über eine Steckverbindung

13. Verfahren nach Anspruch 12 **dadurch gekennzeichnet,**
**daß** der Umfangsabschnitt aus Flachmaterial gebildet ist.

14. Verfahren nach Anspruch 13 **dadurch gekennzeichnet,**
**daß** in das Flachmaterial eine Nut eingeformt ist.

15. Verfahren nach Anspruch 14 **dadurch gekennzeichnet,**
**daß** die Nut in das Flachmaterial gefräst ist.
